# EUROPEAN PATENT SPECIFICATION

(11) **EP 4 049 861 B1**
(45) Date of publication and mention of the grant of the patent: **19.06.2024**
(21) Application number: 20898120.9
(22) Date of filing: 10.07.2020
(51) Int. Cl.: B60C 11/03, B60C 11/12

(54) **TIRE**
REIFEN
PNEUMATIQUE

(30) Priority: 12.12.2019 JP 2019224889
(43) Date of publication of application: 31.08.2022
(73) Proprietor: BRIDGESTONE CORPORATION, Chuo-ku Tokyo 104-8340 (JP)
(72) Inventor: TANAKA Yuta, Tokyo 104-8340 (JP)
(74) Representative: Marks & Clerk LLP
(86) International application number: PCT/JP2020/027136
(87) International publication number: WO 2021/117281

(56) References cited:
- WO-A1-2017/074459
- JP-A- S5 625 003
- JP-A- 2006 062 468
- JP-A- 2014 097 697
- JP-A- 2016 041 588
- JP-A- 2016 117 310
- JP-A- 2017 140 858
- JP-A- 2018 520 057
- JP-B2- 6 148 719
- US-A1- 2013 186 533
- US-A1- 2018 207 990

## Description

### TECHNICAL FIELD

The present invention relates to a tire.

### BACKGROUND

Widthwise grooves extending in a tire width direction are provided in outermost land portions in the tire width direction. This improves the drainage performance of tires. In addition, widthwise sipes extending in the tire width direction are sometimes provided in the outermost land portions in the tire width direction (for example, Patent Literature (PTL) 1) to remove water film and improve the drainage performance of the tires. Attention is also drawn to the disclosures of US2013/186533A1, US2018/207990A1, JP6148719B2, WO2017/074459A1 and JP2006062468A.

### CITATION LIST

### Patent Literature

PTL 1: WO 2019/021723 A1

### SUMMARY

### (Technical Problem)

However, there is still room for improvement in the drainage performance and wet gripping performance of a tire described in PTL 1 in a case in which the groove volume of widthwise grooves decreases during the progress of wear.

It would be helpful to provide a tire capable of improving drainage performance and wet gripping performance during the progress of wear.

### (Solution to Problem)

A tire according to a first aspect of the present invention is a tire including, in a tread surface, a block-shaped land portion partitioned by a partitioning groove or by the partitioning groove and a tread edge, wherein
the block-shaped land portion includes a first sipe and a second sipe extending from different positions in a surface of the block-shaped land portion inwardly in a tire radial direction,
the first sipe includes, on a side of a sipe bottom, a widened portion with a larger sipe width than a side of the tread surface, and
the second sipe includes a plurality of holes recessed inwardly in the tire radial direction in a sipe bottom at positions separate in a sipe longitudinal direction.

### (Advantageous Effect)

According to the present invention, it is possible to provide a tire capable of improving drainage performance and wet gripping performance during the progress of wear.

### BRIEF DESCRIPTION OF THE DRAWINGS

In the accompanying drawings:
FIG. 1 is a tire widthwise sectional view that illustrates a cross section of a tire according to an embodiment of the present invention along a tire width direction;
FIG. 2 is a developed view illustrating a part of a tread surface of a tread portion of the tire illustrated in FIG. 1;
FIG. 3 is a sectional view taken along the line I-I of FIG. 2;
FIG. 4 is a sectional view taken along the line II-II of FIG. 2;
FIG. 5 is a sectional view taken along the line III-III of FIG. 2; and
FIG. 6 is a perspective sectional view in a cross section along III-III of FIG. 2.

### DETAILED DESCRIPTION

An embodiment of a tire according to the present invention will be exemplarily described with reference to the drawings. In each figure, common members and components are indicated with the same reference numerals.

In this specification, "tread surface" means an outer circumferential surface over an entire circumference of the tire that comes into contact with a road surface when the tire mounted on a rim and filled with a specified internal pressure is rolled under a maximum load (hereinafter also referred to as "maximum load condition"). "Tread edges" refer to outer edges of the tread surface in a tire width direction. Furthermore, in this specification, "ground contact length" refers to a maximum length of contact of the tread surface with a road surface in a tire circumferential direction.

In this specification, "rim" means a standard rim (Measuring Rim in ETRTO's STANDARDS MANUAL and Design Rim in TRA's YEAR BOOK) in an applicable size as described in or to be described in an industrial standard valid for regions where tires are produced and used, such as JATMA YEAR BOOK of the JATMA (The Japan Automobile Tyre Manufacturers Association, Inc.) in Japan, STANDARDS MANUAL of the ETRTO (The European Tyre and Rim Technical Organisation) in Europe, YEAR BOOK of TRA (The Tire and Rim Association, Inc.) in the United States, and the like, but in the case of a size not listed in these industrial standards, the "applicable rim" refers to a rim with a width corresponding to a bead width of tires. The term "rim" includes current sizes, as well as sizes that may be to be included in the aforementioned industrial standards in the future. Examples of the "sizes to be included in the future" may be sizes listed as "FUTURE DEVELOPMENTS" in the 2013 edition of STANDARDS MANUAL of the ETRTO.

In this specification, "specified internal pressure" refers to an air pressure (maximum air pressure) corresponding to a maximum load capacity of a single wheel in the applicable size and ply rating described in the aforementioned JATMA YEAR BOOK or other industrial standards. In the case of sizes not listed in the aforementioned industrial standards, the "specified internal pressure" refers to an air pressure (maximum air pressure) corresponding to a maximum load capacity specified for each vehicle on which the tire is mounted. Also, in this specification, "maximum load" means a load corresponding to a maximum load capacity in the applicable sized tire described in the aforementioned industrial standards, or, in the case of a size not listed in the aforementioned industrial standards, a load corresponding to a maximum load capacity specified for each vehicle on which the tire is mounted.

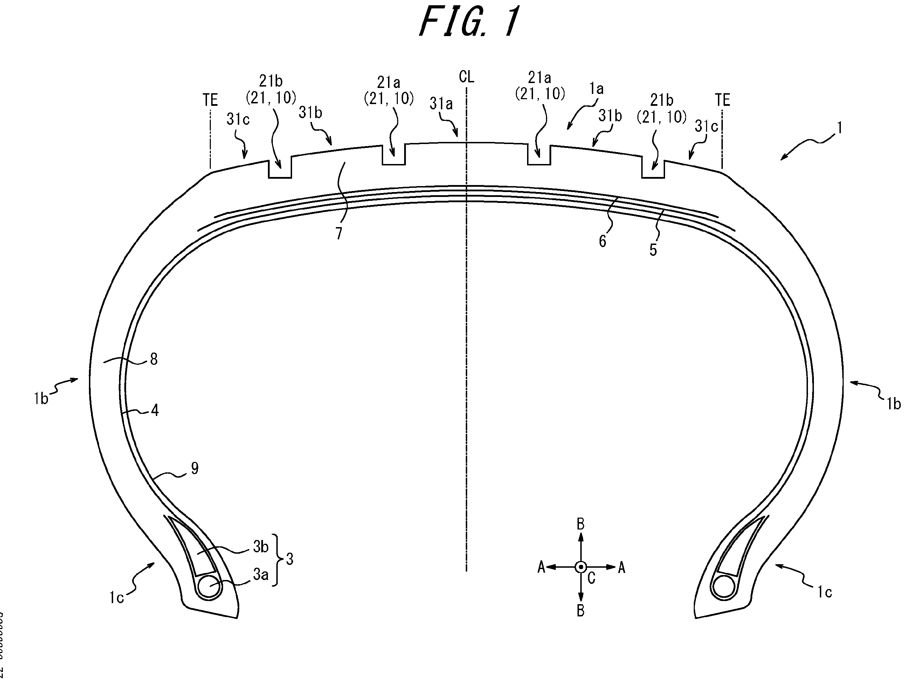

FIG. 1 is a drawing illustrating a pneumatic tire 1 (hereinafter referred to simply as "tire 1") as the embodiment of the tire according to the present invention. FIG. 1 illustrates a tire widthwise cross section of the tire 1 in a plane including a central axis.

As illustrated in FIG. 1, the tire 1 includes a tread portion 1a, a pair of sidewall portions 1b extending inwardly in a tire radial direction A from both ends of the tread portion 1a in a tire width direction B, and a pair of bead portions 1c provided at inner ends of the sidewall portions 1b in the tire radial direction A. The tire 1 according to the present embodiment is a tubeless type radial tire, but the configuration thereof is not particularly limited. The "tread portion 1a" refers to a portion sandwiched between tread edges TE on both sides in the tire width direction B. The "bead portion 1c" refers to a portion where a bead member 3 described later is located in the tire radial direction A. The "sidewall portion 1b" refers to a portion between the tread portion 1a and the bead portion 1c.

The tire 1 of the present embodiment includes the bead members 3, a carcass 4, an inclined belt 5, a circumferential belt 6, tread rubber 7, side rubber 8, and an inner liner 9. Each bead member 3 includes a bead core 3a and a bead filler 3b.

The bead member 3 is provided with the bead core 3a and the bead filler 3b that is disposed outside the bead core 3a in the tire radial direction A. The tire 1 is provided with the carcass 4 that straddles between the pair of bead cores 3a. The carcass 4 is composed of a carcass ply in which cords made of steel or the like are arranged. Furthermore, the tire 1 is provided with the inclined belt 5 that is disposed outside a crown portion of the carcass 4 in the tire radial direction A. The inclined belt 5 is composed of a belt ply in which cords made of organic fibers, steel, or the like are arranged. In the belt ply constituting the inclined belt 5, the cords extend inclinedly at an angle of 10° or more with respect to a tire circumferential direction C. There may be two or more belt plies constituting the inclined belt 5. The tire 1 is also provided with the circumferential belt 6 disposed outside the inclined belt 5 in the tire radial direction A. The circumferential belt 6 is composed of a belt ply in which cords made of organic fibers, steel, or the like are arranged. In the belt ply constituting the circumferential belt 6, the cords extend along the tire circumferential direction C. "The cords extend along the tire circumferential direction" means that the inclination angle of the cords with respect to the tire circumferential direction C is 0° or more and less than 10°. There may be two or more belt plies constituting the circumferential belt 6.

The tire 1 is also provided with the tread rubber 7 disposed outside the circumferential belt 6 in the tire radial direction A, and the side rubber 8 disposed outside each side portion of the carcass 4 in the tire width direction B. Furthermore, the tire 1 is provided with the inner liner 9 that is laminated on an inner surface of the carcass 4.

Although the tire 1 of the present embodiment has the structure described above, the structure is not particularly limited and may be a tire of any other structure. The tire 1 of the present embodiment has a symmetrical structure with respect to a tire equatorial plane CL, but is not limited to this structure and may be a tire asymmetrical with respect to the tire equatorial plane CL.

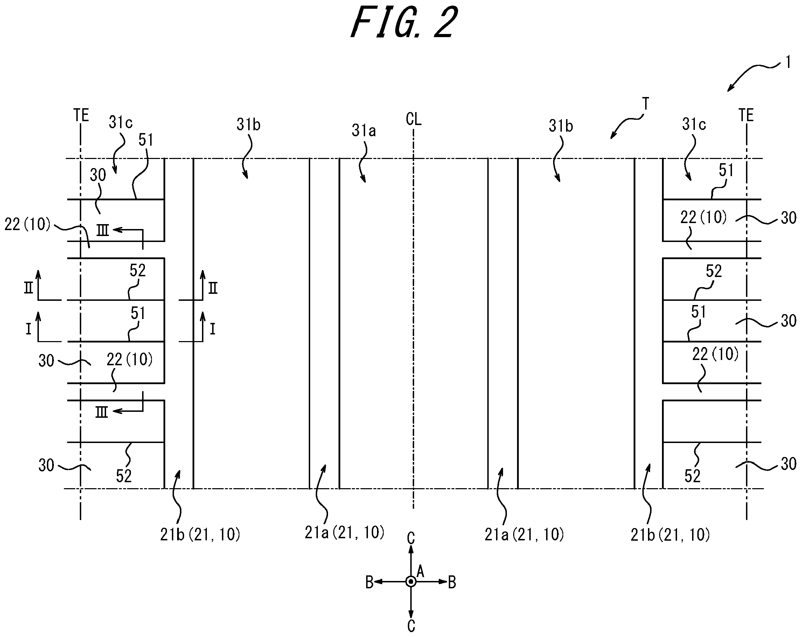

FIG. 2 is a developed view that illustrates a part of a tread surface T of the tread portion 1a of the tire 1. The tire 1 includes, in the tread surface T, block-shaped land portions 30 that are partitioned by partitioning grooves 10, or by the partitioning grooves 10 and the tread edges TE. The "partitioning groove" refers to a groove provided in a tread surface, and a groove the minimum width of which at a groove edge is 2 mm or more when a tire in an unused state is mounted on an applicable rim and filled with a specified internal pressure, and under no load. In the tread surface T of the present embodiment, circumferential grooves 21 extending along the tire circumferential direction C and widthwise grooves 22 extending in the tire width direction B from the circumferential grooves 21 are formed as the above-described partitioning grooves 10, which partition the block-shaped land portions 30. The "circumferential groove" refers to an annular groove extending along the tire circumferential direction C. The "widthwise groove" is a groove that extends from the circumferential groove relatively to the tire width direction B, and that may extend along the tire width direction B or may extend inclinedly at a predetermined angle or less (for example, 45° or less) with respect to the tire width direction B. In other words, the widthwise groove 22 may be a transverse groove that is approximately parallel to the tire width direction B or an inclined groove that is inclined with respect to the tire width direction B.

The partitioning grooves 10 are not limited to the circumferential grooves 21 and the widthwise grooves 22 of the present embodiment. However, by using the circumferential grooves 21 and the widthwise grooves 22 as the partitioning grooves 10, as described in the present embodiment, it is possible to partition the block-shaped land portions 30 with simple configuration that are capable of improving drainage performance and wet gripping performance during the progress of wear.

The circumferential grooves 21 of the present embodiment extend in straight lines in the developed view (refer to FIG. 2), but are not limited to this configuration. The circumferential grooves 21 may extend in zigzag or wavy shapes in the developed view (refer to FIG. 2). The widthwise grooves 22 of the present embodiment extend in straight lines in the developed view (refer to FIG. 2), but are not limited to this configuration. The widthwise grooves 22 may extend in zigzag or wavy shapes in the developed view (refer to FIG. 2). In addition, the widthwise grooves 22 may be curved in an arc shape, or may be bent in an L-shape or crank shape through a bend in the developed view (refer to FIG. 2).

More specifically, four of the circumferential grooves 21 are formed in the tread surface T of the tire 1 according to the present embodiment. The four circumferential grooves 21 and the tread edges TE on both sides of the tire width direction B partition the tread surface T of the tire 1 according to the present embodiment into a center land portion 31a, two intermediate land portions 31b, and two shoulder land portions 31c.

The center land portion 31a is a rib-shaped land portion partitioned between two inner circumferential grooves 21a on a center side of the tire width direction B, among the four circumferential grooves 21. The "rib-shaped land portion" means a tread land portion that has no completely dividing position in the tire circumferential direction C by the widthwise grooves, but is continuous over the entire circumference in the tire circumferential direction C. It is located on both sides of the tire width direction B. In addition, the tire equatorial plane CL passes through the center land portion 31a of the present embodiment.

The intermediate land portions 31b are rib-shaped land portions partitioned between each of outer circumferential grooves 21b, which are outermost in the tire width direction B, and each of the inner circumferential grooves 21a, among the four circumferential grooves 21. The intermediate land portions 31b are tread land portions adjacent to the center land portion 31a outside in the tire width direction B.

The shoulder land portions 31c are each partitioned between the outer circumferential groove 21b and the tread edge TE, and are block-shaped land portion rows each of which is constituted of a plurality of the block-shaped land portions 30. The "block-shaped land portion row" is a tread land portion constituted of the plurality of block-shaped land portions 30 that are completely divided in the tire circumferential direction C by the various partitioning grooves 10 such as the widthwise grooves. In each of the shoulder land portions 31c of the present embodiment, a plurality of the widthwise grooves 2 are arranged at predetermined intervals in the tire circumferential direction C over the entire circumference in the tire circumferential direction C. Each of the widthwise grooves 22 extends from the outer circumferential groove 21b to the tread edge TE. Each of the block-shaped land portions 30 of the shoulder land portions 31c of the present embodiment is partitioned between two of the widthwise grooves 22 adjacent in the tire circumferential direction C.

The details of the block-shaped land portion 30 will be described below. In the present embodiment, the block-shaped land portion 30 of the shoulder land portion 31c, which is partitioned by the outer circumferential groove 21b, the widthwise grooves 22, and the tread edge TE, is exemplarily described, but the block-shaped land portion 30 is not limited to this configuration, as long as the block-shaped land portion 30 is partitioned by the partitioning grooves 10 of the tread surface T, or by the partitioning groove 10 and the tread edge TE. In other words, in the developed view (refer to FIG. 2), the block-shaped land portion 30 may be partitioned by the partitioning grooves 10 of the tread surface T, or by the partitioning grooves 10 and the tread edge TE. In other words, in the developed view (see FIG. 2), the block-shaped land portion 30 should be surrounded by the partitioning grooves 10 of the tread surface T, or by the partitioning groove 10 and the tread edge TE. Here, the partitioning groove 10 of the tread surface T is not limited to the circumferential groove 21 or the widthwise groove 22 of the present embodiment. Thus, the block-shaped land portion 30 may be configured to be partitioned, for example, by various types of the partitioning grooves 10 formed in the center land portion 31a or the intermediate land portion 31b.

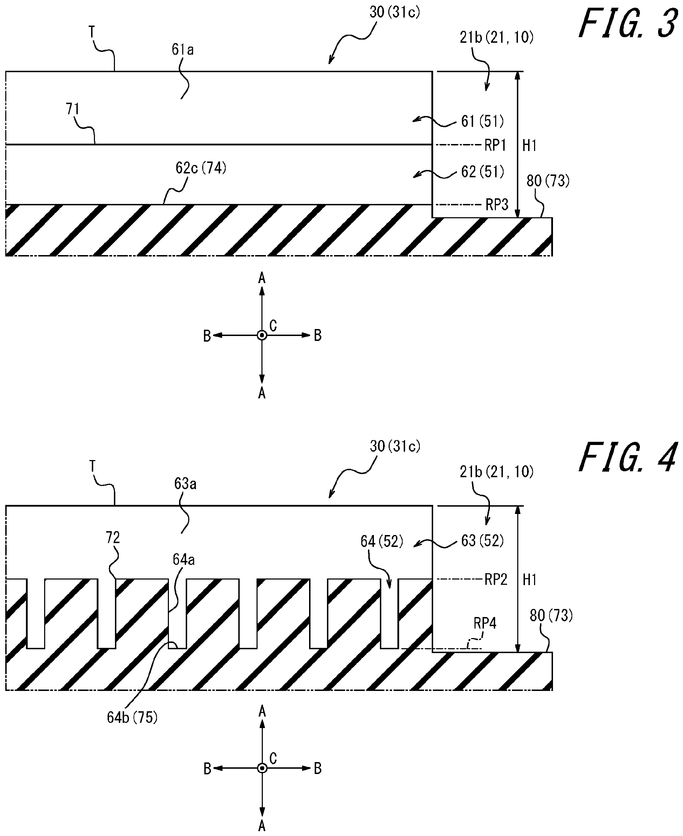

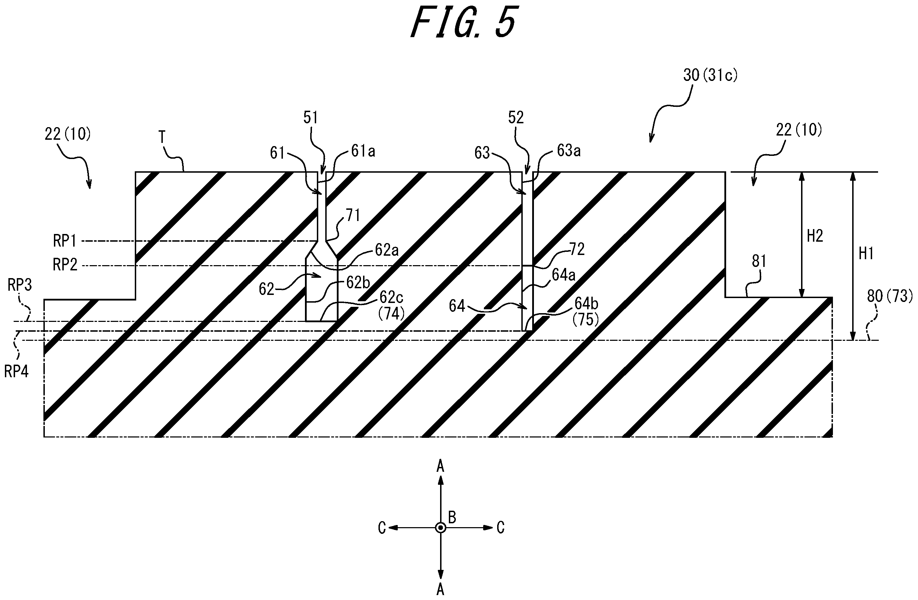

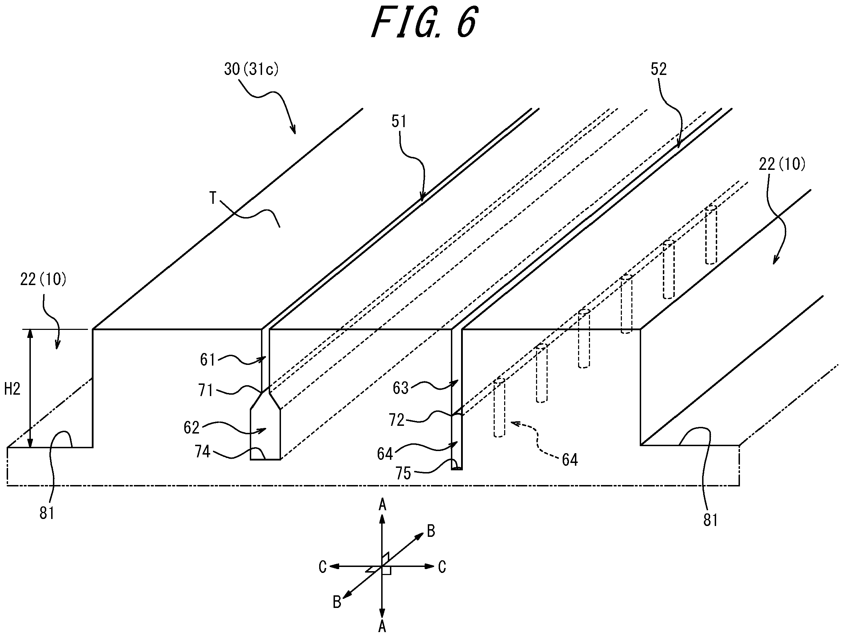

FIG. 3 is a cross sectional view taken along the line I-I of FIG. 2. FIG. 4 is a cross sectional view taken along the lines II-II of FIG. 2. FIG. 5 is a cross sectional view taken along the line III-III of FIG. 2. FIG. 6 is a perspective cross sectional view in a cross section along the line III-III of FIG. 2. As illustrated in FIGS. 3 to 6, the block-shaped land portion 30 includes a first sipe 51 and a second sipe 52. The first sipe 51 and the second sipe 52 extend from different positions in a surface of the block-shaped land portion 30 inwardly in the tire radial direction A. The "sipe" means a groove that extends from a tread surface inwardly in a tire radial direction and a groove the maximum width of which at the tread surface is less than 2 mm when a tire in an unused state is mounted on an applicable rim and filled with a specified internal pressure, and under no load. Hereinafter, the width of the sipe is referred to as "sipe width".

As illustrated in FIGS. 3, 5, and 6, the first sipe 51 has, on the side of a sipe bottom, a widened portion 62 with a larger sipe width than the side of the tread surface T. More specifically, the first sipe 51 of the present embodiment has a first slit 61 extending from the tread surface T to a predetermined depth in the tire radial direction A, and the widened portion 62 connected to the inside of the first slit 61 in the tire radial direction A. The above-described "sipe bottom" means an inner end of the sipe in the tire radial direction A. The sipe bottom of the first sipe 51 is constituted by an inner surface of the widened portion 62 in the tire radial direction A.

Note that, the first slit 61 of the first sipe 51 of the present embodiment has a constant sipe width regardless of the position in the tire radial direction A. The sipe width of the first slit 61 is not particularly limited as long as the sipe width is less than 2 mm, but is preferably set at less than 1 mm, such as in a range of 0.3 mm to 0.8 mm. The widened portion 62 should have a portion widened from the first slit 61, and the dimensions of the sipe width thereof are not particularly limited. However, from the viewpoint of improving the drainage performance of the tire 1 during the progress of the wear, for example, the sipe width is preferably 2 mm or more, and more preferably 3 mm or more.

As illustrated in FIGS. 4, 5, and 6, the second sipe 52 includes a plurality of holes 64 recessed inwardly in the tire radial direction A in a sipe bottom at positions separate in a sipe longitudinal direction. More specifically, the second sipe 52 of the present embodiment has a second slit 63 extending from the tread surface T to a predetermined depth in the tire radial direction A, and the plurality of holes 64 that are connected to the inside of the second slit 63 in the tire radial direction A. The above-described "sipe longitudinal direction" means an extension direction of the sipe in the tread surface T. Therefore, the sipe longitudinal direction of the first sipe 51 and the second sipe 52 of the present embodiment is the tire width direction B. In the present embodiment, the second slit 63 is a portion with a constant depth in the tire radial direction A over an entire region in the sipe longitudinal direction. As described above, the plurality of holes 64 of the second sipe 52 are disposed at predetermined intervals in the sipe longitudinal direction. Therefore, as illustrated in FIGS. 4, 5, and 6, the sipe bottom of the second sipe 52 has an uneven shape that is recessed inwardly in the tire radial direction A at the positions of the holes 64. Note that, the sipe bottom of the second sipe 52 of the present embodiment has an uneven shape like a pulse wave in the cross sectional view of FIG. 4, but is not limited to this shape.

Note that, the second slit 63 of the second sipe 52 of the present embodiment has a constant sipe width regardless of the position in the tire radial direction A. The sipe width of the second slit 63 is not particularly limited as long as the sipe width is less than 2 mm, but is preferably set at less than 1 mm, such as in a range of 0.3 mm to 0.8 mm. The length of the hole 64 in the tire radial direction A, and the dimension and shape of the hole 64 in cross section perpendicular to the tire radial direction A are not particularly limited. However, it is preferable that the maximum open width of the hole 64, as a maximum sipe width in cross section perpendicular to the tire radial direction A, is less than 2 mm. By doing so, the holes 64 function as pin sipes when the holes 64 are exposed to the tread surface T during the progress of the wear.

The block-shaped land portion 30 is provided with both the first sipe 51 including the widened portion 62 and the second sipe 52 including the plurality of holes 64, so it is possible to improve the drainage performance and wet gripping performance of the tire 1 during the progress of the wear. Specifically, as the wear on the surface of the block-shaped land portion 30 progresses, the partitioning grooves 10 (in the present embodiment, the outer circumferential groove 21b and the widthwise grooves 22) around the block-shaped land portion 30 are reduced in volume. As a result, the drainage performance owing to the partitioning grooves 10 deteriorates, as compared to an unused state in which the surface of the block-shaped land portion 30 is not worn. However, the block-shaped land portion 30 is provided with the first sipe 51 including the widened portion 62. Therefore, even when the wear on the surface of the block-shaped land portion 30 progresses, the widened portion 62 is newly exposed to the tread surface T, which prevents the deterioration in the drainage performance on wet road surfaces. In addition, as the wear on the surface of the block-shaped land portion 30 progresses and the thickness of a land of the block-shaped land portion 30 in the tire radial direction A becomes thinner, the sipe depths of the first sipe 51 and the second sipe 52 also become smaller, and, in combination with hardening and the like of tread rubber 7 due to aging, the deformability of the block-shaped land portion 30 in the tire radial direction A is reduced and compressive stiffness is easily increased. However, the block-shaped land portion 30 is provided with the second sipe 52 with the plurality of holes 64. Therefore, even when the wear on the surface of the block-shaped land portion 30 progresses, the holes 64 are newly exposed on the tread surface T, thereby reducing the compressive stiffness of the block-shaped land portion 30. This makes it easier for the surface of the block-shaped land portion 30 to bite into fine irregularities of the road surfaces so that the wet gripping performance on wet road surfaces can be improved.

Here, the inventor of the present application, as a result of study, has found that the provision of the plurality of holes 64 in the sipe bottom of the second sipe 52 facilitates reducing the compressive stiffness of the block-shaped land portion 30 in the tire radial direction A when the holes 64 are exposed to the tread surface T during the progress of the wear, as compared to the case of simply extending the entire second slit 63 of the second sipe 52 in the tire radial direction A. Compared to the second slit 63, the holes 64 make it difficult for an edge part to collapse when the edge part contacts the road surface, and makes it difficult to cause minute unevenness (deflation) of ground contact pressure in a ground contact region due to the collapse of the edge part. Therefore, by providing the plurality of holes 64 that are separate from each other, a wider area of the surface of the block-shaped land portion 30 can easily follow and bite into the fine irregularities of the road surface.

The further detail of the block-shaped land portion 30 of the present embodiment will be described below with reference to FIGS. 2 to 6.

As described above, the sipe longitudinal direction of the first sipe 51 of the present embodiment coincides with the tire width direction B. In other words, the first sipe 51 of the present embodiment extends in the surface of the block-shaped land portion 30 approximately in parallel to the tire width direction B. However, the sipe longitudinal direction of the first sipe 51 is not particularly limited. For example, the first sipe 51 may extend in the surface of the block-shaped land portion 30 approximately in parallel to the tire circumferential direction C. Also, for example, the first sipe 51 may extend in the surface of the block-shaped land portion 30 inclinedly with respect to the tire width direction B and the tire circumferential direction C. However, it is preferable that the first sipe 51 extends in a direction orthogonal or inclined to the tire circumferential direction C. Thereby, it is possible to increase the gripping force of the block-shaped land portion 30 during tire rolling in an unused state before the progress of the wear. The first sipe 51 extends in a straight line in the developed view (refer to FIG. 2), but is not limited to this configuration. The first sipe 51 may extend, for example, in an arc, zigzag, or wavy shape in the developed view (refer to FIG. 2).

Also, in the present embodiment, the sipe width of the first sipe 51 at the surface of the block-shaped land portion 30 in the tire 1 in the unused state is constant regardless of the position in the sipe longitudinal direction, but is not limited to this configuration. Therefore, the sipe width of the first sipe 51 at the surface of the block-shaped land portion 30 in the tire 1 in the unused state may vary depending on the position in the sipe longitudinal direction, as long as a maximum sipe width is 2 mm or less.

As described above, the first sipe 51 of the present embodiment includes the first slit 61 and the widened portion 62. The first slit 61 of the present embodiment is constituted of inner walls 61a extending parallel to each other in an opposite manner. The sipe width of the first slit 61, which is the opposite distance of the inner walls 61a, is constant regardless of the position in the tire radial direction A. However, the sipe width may vary depending on the position in the tire radial direction A, as long as the maximum width at the tread surface is less than 2 mm. The first slit 61 of the present embodiment extends in a straight line inwardly in the tire radial direction A in the cross sectional view of FIG. 5, but is not limited to this configuration. The first slit 61 may extend in a direction inclined to the tire radial direction A in the same cross sectional view, for example, in a straight, arc, zigzag, or wavy shape.

The first sipe 51 of the present embodiment is provided with the first slit 61 on the side of the tread surface T, but may not have the first slit 61. In such a case, the first sipe 51 may be constituted of only the widened portion 62 in which the sipe width is larger on the side of the sipe bottom than on the side of the tread surface T.

In the cross sectional view of FIG. 5, the widened portion 62 of the present embodiment includes a tapered portion 62a that is continuous with the first slit 61 and has a gradually increasing sipe width inwardly in the tire radial direction A, a wide portion 62b that has a constant maximum sipe width regardless of the position in the tire radial direction A, and a bottom portion 62c that is continuous with the wide portion 62b and constitutes the sipe bottom. The shape of the widened portion 62 is not limited to the shape of the present embodiment. The widened portion 62 may be, for example, an approximately triangular shape in the cross sectional view of FIG. 5, without the wide portion 62b of the present embodiment. Also, the widened portion 62 may be, for example, an approximately rectangular shape in the cross sectional view of FIG. 5, without the tapered portion 62a of the present embodiment. Furthermore, the widened portion 62 may be, for example, an approximately circular or elliptical shape in the cross sectional view of FIG. 5. However, it is preferable that the widened portion 62 has a portion (taper portion 62a in the present embodiment) at which the sipe width gradually increases inwardly in the tire radial direction A, and that the sipe width does not widen further in the tire radial direction A than this portion (wide portion 62b in the present embodiment), as in the present embodiment. This configuration facilitates pulling out a mold blade used to form the first sipe 51 during vulcanization formation of the tire 1 without damaging the first sipe 51.

One end of the widened portion 62 of the first sipe 51 of the present embodiment is connected to the circumferential groove 21 as the partitioning groove 10. More specifically, one end of the widened portion 62 of the first sipe 51 of the present embodiment is connected to the outer circumferential grooves 21b. The other end of the widened portion 62 of the first sipe 51 of the present embodiment reaches the position of the tread edge TE in the tire width direction B, without being connected to either the circumferential groove 21 or the widthwise groove 22 as the partitioning groove 10. In other words, the widened portion 62 of the first sipe 51 penetrates through the block-shaped land portion 30 in a state before being exposed to the tread surface T.

Note that, in the present embodiment, since the block-shaped land portion 30 is provided in the shoulder land portion 31c, the other end of the widened portion 62 reaches the position of the tread edge TE in the tire width direction B. However, in a case in which the block-shaped land portion 30 is provided in, for example, the center land portion 31a or the intermediate land portion 31b, both ends of the widened portion 62 of the first sipe 51 need only be connected to the partitioning grooves 10. In this way, it is preferable that each of both ends of the widened portion 62 of the first sipe 51 is connected to the partitioning groove 10 or reaches the position of the tread edge TE in the tire width direction B without being connected to the partitioning groove 10. Thereby, it is possible to achieve the widened portion 62 that penetrates through the block-shaped land portion 30 in a state before being exposed to the tread surface T.

By making the widened portion 62 penetrate through the block-shaped land portion 30, the drainage performance of the tire 1 can be further improved during the progress of the wear in which the widened portion 62 is exposed to the tread surface T.

Note that, it is also preferable that each of the both ends of the first slit 61 of the first sipe 51 in the slit longitudinal direction is connected to the partitioning groove 10 or reaches the position of the tread edge TE in the tire width direction B without being connected to the partitioning groove 10. In other words, it is preferable that the first slit 61 divides the block-shaped land portion 30. In this way, compared to a first slit formed partially in the block-shaped land portion 30, the first sipe 51 contributes to improvement in the drainage performance of the tire 1 in an unused state before the progress of the wear.

The sipe longitudinal direction of the second sipe 52 of the present embodiment is the tire width direction B. That is, the second sipe 52 of the present embodiment extends in the surface of the block-shaped land portion 30 approximately in parallel to the tire width direction B. In other words, the second sipe 52 of the present embodiment extends in the surface of the block-shaped land portion 30 approximately in parallel to the first sipe 51. However, the sipe longitudinal direction of the second sipe 52 is not particularly limited. For example, the second sipe 52 may extend in the surface of the block-shaped land portion 30 approximately in parallel to the tire circumferential direction C. Also, for example, the second sipe 52 may extend in the surface of the block-shaped land portion 30 inclinedly with respect to the tire width direction B and the tire circumferential direction C. However, it is preferable that the second sipe 52 extends in a direction orthogonal or inclined to the tire circumferential direction C. Thereby, it is possible to increase the gripping force of the block-shaped land portion 30 during tire rolling in an unused state before the progress of the wear. The second sipe 52 extends in a straight line in the developed view (refer to FIG. 2), but is not limited to this configuration. The second sipe 52 may extend, for example, in an arc, zigzag, or wavy shape in the developed view (refer to FIG. 2).

Also, in the present embodiment, the sipe width of the second sipe 52 at the surface of the block-shaped land portion 30 in the tire 1 in the unused state is constant regardless of the position in the sipe longitudinal direction, but is not limited to this configuration. Therefore, the sipe width of the second sipe 52 at the surface of the block-shaped land portion 30 in the tire 1 in the unused state may vary depending on the position in the sipe longitudinal direction, as long as a maximum sipe width is 2 mm or less.

As described above, the second sipe 52 of the present embodiment includes the second slit 63 and the plurality of holes 64. The second slit 63 of the present embodiment is constituted of inner walls 63a extending parallel to each other in an opposite manner. The sipe width of the second slit 63, which is the opposite distance of the inner walls 63a, is constant regardless of the position in the tire radial direction A. However, the sipe width may vary depending on the position in the tire radial direction A, as long as the maximum width at the tread surface is less than 2 mm. The second slit 63 of the present embodiment extends in a straight line inwardly in the tire radial direction A in the cross sectional view of FIG. 5, but is not limited to this configuration. The second slit 63 may extend in a direction inclined to the tire radial direction A in the same cross sectional view, for example, in a straight, arc, zigzag, or wavy shape.

In addition, it is also preferable that each of both ends of the second slit 63 of the second sipe 52 in the slit longitudinal direction is connected to the partitioning groove 10 or reaches the position of the tread edge TE in the tire width direction B without being connected to the partitioning groove 10. In other words, it is preferable that the second slit 63 divides the block-shaped land portion 30. In this way, compared to a second slit formed partially in the block-shaped land portion 30, the second sipe 52 contributes to improvement in the drainage performance of the tire 1 in an unused state before the progress of the wear.

The holes 64 are formed in the sipe bottom of the second sipe 52. More specifically, the plurality of holes 64 of the present embodiment are disposed at predetermined intervals in the sipe longitudinal direction over the entire circumference in the sipe longitudinal direction. The hole depth of the holes 64 of the present embodiment is approximately constant, but may vary. The hole 64 of the present embodiment is a bottomed hole that is constituted of an inner wall 64a with a circular shape in a cross sectional view perpendicular to the tire radial direction A and a flat bottom 64b connected to the inner wall 64a, but the shape of the hole 64 is not limited to this shape. The inner wall 64a of the hole 64 may be configured such that, for example, a maximum open width in a cross sectional view perpendicular to the tire radial direction A gradually increases inwardly in the tire radial direction A. With this configuration, the compressive stiffness can be reduced as the wear progresses. The inner wall 64a of the hole 64 may be, for example, a polygonal shape such as a triangular shape in a cross sectional view perpendicular to the tire radial direction A. Furthermore, the bottom 64b of the hole 64 may be, for example, a curved surface recessed inwardly in the tire radial direction A.

In the holes 64 of the present embodiment, the maximum length of the hole 64 in the tire radial direction A is longer than the maximum open width in any cross sectional view perpendicular to the tire radial direction A. In other words, the hole 64 of the present embodiment has a long shape in the tire radial direction A.

As described above, the block-shaped land portion 30 of the present embodiment is provided with the first sipe 51 and the second sipe 52. The relative positional relationship of each component of the partitioning grooves 10 partitioning the block-shaped land portion 30, the first sipe 51, and the second sipe 52 will be described below with reference to FIGS. 2 to 6.

As illustrated in FIGS. 5 and 6, in the present embodiment, an outer end 71 of the widened portion 62 of the first sipe 51 in the tire radial direction A is located outside in the tire radial direction A relative to an outer end 72 of any of the holes 64 of the second sipe 52 in the tire radial direction A. The outer end 71 of the widened portion 62 of the present embodiment in the tire radial direction A is a portion connected to an inner end of the first slit 61 in the tire radial direction A. In FIG. 5, the single-dotted line "RP1" indicates the position of the outer end 71 of the widened portion 62 in the tire radial direction A. The positions of outer ends 72 of the holes 64 of the present embodiment in the tire radial direction A are approximately equal. In FIG. 5, the single-dotted line "RP2" indicates the position of the outer ends 72 of the holes 64 in the tire radial direction A. In this way, since the outer end 71 of the widened portion 62 is located outside the outer ends 72 of the holes 64 in the tire radial direction A, the widened portion 62 of the first sipe 51 is exposed to the tread surface T earlier than the holes 64 of the second sipe 52 while the wear on the surface of the block-shaped land portion 30 progresses. As the wear on the surface of the block-shaped land portion 30 progresses, the groove volume of the outer circumferential grooves 21b (refer to FIGS. 3 and 4) and the widthwise grooves 22 (refer to FIGS. 5 and 6), as the partitioning grooves 10, decreases, and therefore the drainage performance of the tread surface T tends to greatly deteriorate. Therefore, by making the outer end 71 of the widened portion 62 and the outer ends 72 of the holes 64 satisfy the above-described positional relationship, the widened portion 62 is exposed to the tread surface T earlier than the holes 64, so the drainage performance that has deteriorated due to the reduction in the groove volume of the partitioning grooves 10 can be quickly recovered.

As illustrated in FIGS. 5 and 6, in the present embodiment, an inner end 74 of the widened portion 62 of the first sipe 51 in the tire radial direction A is located outside in the tire radial direction A relative to an inner end 75 of any of the holes 64 of the second sipe 52 in the tire radial direction A. In FIG. 5, the single-dotted line "RP3" indicates the position of the inner end 74 of the widened portion 62 in the tire radial direction A. The inner end 74 of the widened portion 62 of the present embodiment is constituted of the bottom portion 62c of the widened portion 62. In FIG. 5, the single-dotted line "RP4" indicates the position of the inner ends 75 of the holes 64 in the tire radial direction A. The inner end 75 of the hole 64 of the present embodiment is constituted of the bottom 64b of the hole 64. However, the inner end 74 of the widened portion 62 of the first sipe 51 in the tire radial direction A may be located inside in the tire radial direction A or in the same position in the tire radial direction A, relative to the inner end 75 of any of the holes 64 of the second sipe 52 in the tire radial direction A.

As illustrated in FIGS. 5 and 6, in the present embodiment, the inner end 74 of the widened portion 62 of the first sipe 51 in the tire radial direction A is located inside in the tire radial direction A relative to the outer end 72 of any of the holes 64 of the second sipe 52 in the tire radial direction A. That is, the widened portion 62 and the holes 64 have parts that are in the same position in the tire radial direction A. Thereby, both the widened portion 62 and the holes 64 are exposed to the tread surface T while the wear on the surface of the block-shaped land portion 30 progresses. Therefore, the drainage performance and wet gripping performance of the tire 1 during the progress of the wear can be reliably improved.

Furthermore, as illustrated in FIGS. 3 to 6, it is preferable that the outer end 71 of the widened portion 62 in the tire radial direction A is located outside in the tire radial direction A from a deepest portion 73 of the partitioning grooves 10, which is located at an innermost position in the tire radial direction A. The partitioning grooves 10 of the present embodiment are constituted of the circumferential grooves 21 and widthwise grooves 22, as described above. The partitioning grooves 10 partitioning the block-shaped land portions 30 of the present embodiment are the outer circumferential grooves 21b and the widthwise grooves 22. Therefore, the deepest portion 73 of the present embodiment refers to a portion of the outer circumferential grooves 21b and the widthwise grooves 22 that is located at an innermost position in the tire radial direction A. Each of the outer circumferential grooves 21b and the widthwise grooves 22 in the present embodiment has a constant maximum groove depth regardless of the position in the extension direction. In addition, in the present embodiment, a maximum groove depth H1 (refer to FIGS. 3 and 4) of the outer circumferential grooves 21b is larger than a maximum groove depth H2 (refer to FIGS. 5 and 6) of the widthwise grooves 22. Therefore, the deepest portion 73 of the partitioning grooves 10 partitioning the block-shaped land portions 30 of the present embodiment is not constituted of a groove bottom 81 of the widthwise groove 22, but is constituted of a groove bottom 80 of the outer circumferential groove 21b. In FIG. 5, the position of the groove bottom 80 of the outer circumferential groove 21b is illustrated by a single-dotted line for convenience of explanation. Therefore, as illustrated in FIGS. 3 and 5, in the present embodiment, the outer end 71 of the widened portion 62 is located outside the groove bottom 80 of the outer circumferential groove 21b in the tire radial direction A. Thereby, the widened portion 62 can be exposed to the tread surface T before the partitioning grooves 10 around the block-shaped land portion 30 completely disappear. As a result, the drainage performance of the tread surface T can be prevented from deteriorating significantly.

Furthermore, as illustrated in FIGS. 5 and 6, it is preferable that the outer end 71 of the widened portion 62 is located outside in the tire radial direction A from the groove bottoms 81 of the widthwise grooves 22. In other words, it is preferable that the outer end 71 of the widened portion 62 is located outside in the tire radial direction A from any position of the groove bottoms (groove bottoms 80 and 81 in the present embodiment) of the partitioning grooves 10 around the block-shaped land portion 30. Thereby, the widened portion 62 can be exposed to the tread surface T before the partitioning grooves 10 around the block-shaped land portion 30 partially disappear. As a result, it is possible to further prevent deterioration in the drainage performance of the tread surface T.

In particular, it is preferable that the outer end 71 of the widened portion 62 is located 2 mm or more outside in the tire radial direction A from any position of the groove bottoms (groove bottoms 80 and 81 in the present embodiment) of the partitioning grooves 10 around the block-shaped land portion 30. By doing so, it is possible to prevent deterioration in the drainage performance of the tread surface T. Note that, the outer end 71 of the widened portion 62 is more preferably located 3 mm or more outside in the tire radial direction A from any position of the groove bottoms of the partitioning grooves 10 around the block-shaped land portion 30, and especially preferably located 4 mm or more outside in the tire radial direction A. By doing so, it is possible to further prevent deterioration in the drainage performance of the tread surface T.

As illustrated in FIGS. 5 and 6, it is preferable that the outer ends 72 of the holes 64 are located outside in the tire radial direction A from the groove bottom 80 of the outer circumferential groove 21b and the groove bottoms 81 of the widthwise grooves 22, as the deepest portion 73. That is, it is preferable that the outer ends 72 of the holes 64 are located outside in the tire radial direction A from any position of the groove bottoms (groove bottoms 80 and 81 in the present embodiment) of the partitioning grooves 10 around the block-shaped land portion 30. Thereby, the holes 64 can be exposed to the tread surface T before the partitioning grooves 10 around the block-shaped land portion 30 partially disappear. Therefore, it is possible to prevent the wear on the surface of the block-shaped land portion 30 and a large increase in compressive stiffness.

Furthermore, as illustrated in FIG. 5, it is preferable that the inner end 74 of the widened portion 62 of the first sipe 51 in the tire radial direction A is located inside in the tire radial direction A from the groove bottoms 81 of the widthwise grooves 22. Thereby, even when the widthwise grooves 22 disappear, the drainage performance can be secured owing to the widened portion 62. The inner end 74 of the widened portion 62 of the present embodiment is located outside in the tire radial direction A from the groove bottom 80 of the outer circumferential groove 21b, but not limited to this configuration and may be located inside in the tire radial direction A from the groove bottom 80 of the outer circumferential groove 21b.

In addition, as illustrated in FIG. 5, it is preferable that the inner ends 75 of the holes 64 of the second sipe 52 in the tire radial direction A are located inside in the tire radial direction A from the groove bottoms 81 of the widthwise grooves 22. Thereby, even when the widthwise grooves 22 disappear, a sudden increase in compressive stiffness can be prevented. The inner ends 75 of the holes 64 of the present embodiment are located outside in the tire radial direction A from the groove bottom 80 of the outer circumferential groove 21b, but not limited to this configuration and may be located inside in the tire radial direction A from the groove bottom 80 of the outer circumferential groove 21b.

Note that, the block-shaped land portion 30 of the present embodiment is provided with one of the above-described first sipe 51 and one of the above-described second sipe 52, but the numbers of first sipes 51 and second sipes 52 provided in each block-shaped land portion 30 are not particularly limited. Accordingly, the block-shaped land portion 30 may be provided with two or more first sipes 51. The block-shaped land portion 30 may also be provided with two or more second sipes 52.

In a case in which the block-shaped land portion 30 is provided with the two or more first sipes 51 and/or the two or more second sipes 52, the arrangement of the first sipes 51 and/or the second sipes 52 in the block-shaped land portion 30 is not particularly limited and may be set as appropriate. In a case in which the block-shaped land portion 30 includes three sipes in total, for example, one first sipe 51 and two second sipes 52, the second sipes 52 may be arranged on both sides of the first sipe 51 in the tire circumferential direction C. According to this arrangement, the holes 64 (for example, pin sipes) can be arranged in either of two block pieces divided by the first sipe 51, so the compressive stiffness reduction effect can be provided to either block piece. In addition, in a case in which the block-shaped land portion 30 includes three sipes in total, for example, two first sipes 51 and one second sipe 52, the first sipes 51 may be arranged on both sides of the second sipe 52 in the tire circumferential direction C.

The tire of the present invention is not limited to the specific configuration illustrated in the embodiment described above, but can be transformed and modified in various ways as long as it does not depart from the scope of the claims.

### INDUSTRIAL APPLICABILITY

The present invention relates to a tire.

### REFERENCE SIGNS LIST

- 1: Tire
- 1a: Tread portion
- 1b: Sidewall portion
- 1c: Bead portion
- 3: Bead member
- 3a: Bead core
- 3b: Bead filler
- 4: Carcass
- 5: Inclined belt
- 6: Circumferential belt
- 7: Tread rubber
- 8: Side rubber
- 9: Inner liner
- 10: Partitioning groove
- 21: Circumferential groove
- 21a: Inner circumferential groove
- 21b: Outer circumferential groove
- 22: Widthwise groove
- 30: Block-shaped land portion
- 31a: Center land portion
- 31b: Intermediate land portion
- 31c: Shoulder land portion
- 51: First sipe
- 52: Second sipe
- 61: First slit
- 61a: Inner wall of first slit
- 62: Widened portion
- 62a: Tapered portion of widened portion
- 62b: Wide portion of widened portion
- 62c: Bottom portion of widened portion
- 63: Second slit
- 63a: Inner wall of second slit
- 64: Hole
- 64a: Inner wall of hole
- 64b: Bottom of hole
- 71: Outer end of widened portion of first sipe in tire radial direction
- 72: Outer end of hole of second sipe in tire radial direction
- 73: Deepest portion of partitioning groove
- 74: Inner end of widened portion of first sipe in tire radial direction
- 75: Inner end of hole of second sipe in tire radial direction
- 80: Groove bottom of outer circumferential groove (partitioning groove)
- 81: Groove bottom of widthwise groove (partitioning groove)
- A: Tire radial direction
- B: Tire width direction
- C: Tire circumferential direction
- CL: Tire equatorial plane
- T: Tread surface
- TE: Tread edge
- H1: Maximum groove depth of outer circumferential groove
- H2: Maximum groove depth of widthwise groove
- RP1: Position of outer end of widened portion in tire radial direction
- RP2: Position of outer end of hole in tire radial direction
- RP3: Position of inner end of widened portion in tire radial direction
- RP4: Position of inner end of hole in tire radial direction

## Claims

1. A tire (1) comprising, in a tread surface (T), a block-shaped land portion (30) partitioned by a partitioning groove (10) or by the partitioning groove (10) and a tread edge (TE), wherein
the block-shaped land portion (30) includes a first sipe (51) and a second sipe (52) extending from different positions in a surface of the block-shaped land portion (30) inwardly in a tire radial direction (A), and
the first sipe (51) includes, on a side of a sipe bottom, a widened portion (62) with a larger sipe width than a side of the tread surface (T), and
**characterized in that** the second sipe (52) includes a plurality of holes (64) recessed inwardly in the tire radial direction (A) in a sipe bottom at positions separate in a sipe longitudinal direction.

2. The tire (1) according to claim 1, wherein an outer end (71) of the widened portion (62) in the tire radial direction (A) is located outside in the tire radial direction (A) relative to outer ends (72) of the plurality of holes (64) in the tire radial direction (A).

3. The tire (1) according to claim 1 or 2, wherein an outer end (71) of the widened portion (62) in the tire radial direction (A) is located outside in the tire radial direction (A) relative to a deepest portion (73) of the partitioning groove (10) located innermost in the tire radial direction (A).

4. The tire (1) according to any one of claims 1 to 3, wherein each of both ends of the widened portion (62) of the first sipe (51) is connected to the partitioning groove (10), or reaches a position of the tread edge (TE) in a tire width direction (B) without being connected to the partitioning groove (10).

5. The tire (1) according to any one of claims 1 to 4, wherein the partitioning groove (10) configured to partition the block-shaped land portion (30) includes:
a circumferential groove (21) extending in a tire circumferential direction (C); and
a widthwise groove (22) extending in a tire width direction (B) from the circumferential groove (21).

## Patentansprüche

1. Reifen (1), der, in einer Lauffläche (T), einen blockförmigen Stegabschnitt (30) umfasst, der durch eine Trennungsrille (10) oder durch die Trennungsrille (10) und eine Laufflächenkante (TE) unterteilt ist, wobei
der blockförmige Stegabschnitt (30) eine erste Lamelle (51) und eine zweite Lamelle (52) einschließt, die sich von unterschiedlichen Positionen in einer Oberfläche des blockförmigen Stegabschnitts (30) in einer Reifenradialrichtung (A) nach innen erstrecken, und
die erste Lamelle (51), auf einer Seite einer Lamellensohle, einen verbreiterten Abschnitt (62) mit einer größeren Lamellenbreite als eine Seite der Lauffläche (T), einschließt, und
**dadurch gekennzeichnet, dass** die zweite Lamelle (52) eine Vielzahl von Löchern (64), die in der Reifenradialrichtung (A) nach innen vertieft sind, in einer Lamellensohle an in einer Lamellenlängsrichtung getrennten Positionen einschließt.

2. Reifen (1) nach Anspruch 1, wobei ein in der Reifenradialrichtung (A) äußeres Ende (71) des verbreiterten Abschnitts (62) in der Reifenradialrichtung (A) außerhalb im Verhältnis zu äußeren Enden (72) der Vielzahl von Löchern (64) in der Reifenradialrichtung (A) angeordnet ist.

3. Reifen (1) nach Anspruch 1 oder 2, wobei ein in der Reifenradialrichtung (A) äußeres Ende (71) des verbreiterten Abschnitts (62) in der Reifenradialrichtung (A) außerhalb im Verhältnis zu einem tiefsten Abschnitt (73) der Trennungsrille (10) angeordnet ist, die in der Reifenradialrichtung (A) am weitesten innen angeordnet ist.

4. Reifen (1) nach einem der Ansprüche 1 bis 3, wobei jedes von den beiden Enden des verbreiterten Abschnitts (62) der ersten Lamelle (51) mit der Trennungsrille (10) verbunden ist oder eine Position der Laufflächenkante (TE) in einer Reifenbreitenrichtung (B) erreicht, ohne mit der Trennungsrille (10) verbunden zu sein.

5. Reifen (1) nach einem der Ansprüche 1 bis 4, wobei die Trennungsrille (10), die dafür konfiguriert ist, den blockförmigen Stegabschnitt (30) zu trennen, Folgendes einschließt:
eine umlaufende Rille (21), die sich in einer Reifenumfangsrichtung (C) erstreckt; und
eine Breitenrichtungsrille (22), die sich in einer Reifenbreitenrichtung (B) von der umlaufenden Rille (21) aus erstreckt.

## Revendications

1. Pneumatique (1) comprenant, dans une surface de bande de roulement (T), une partie d'appui en forme de pavé (30), séparée par une rainure de séparation (10) ou par la rainure de séparation (10) et un bord de la bande de roulement (TE), dans lequel
la partie d'appui en forme de pavé (30) inclut une première lamelle (51) et une deuxième lamelle (52) s'étendant à partir de différentes positions dans une surface de la partie d'appui en forme de pavé (30) vers l'intérieur dans une direction radiale du pneumatique (A), et
la première lamelle (51) inclut, sur un côté d'un fond de lamelle, une partie élargie (62), avec une largeur de lamelle supérieure à celle sur un côté de la surface de bande de roulement (T), et
**caractérisé en ce que** la deuxième lamelle (52) inclut une pluralité de trous (64) évidés vers l'intérieur, dans la direction radiale du pneumatique (A), dans un fond de lamelle au niveau de positions séparées dans une direction longitudinale de la lamelle.

2. Pneumatique (1) selon la revendication 1, dans lequel une extrémité externe (71) de la partie élargie (62), dans la direction radiale du pneumatique (A), est située à l'extérieur, dans la direction radiale du pneumatique (A), par rapport aux extrémités externes (72) de la pluralité de trous (64) dans la direction radiale du pneumatique (A).

3. Pneumatique (1) selon la revendication 1 ou la revendication 2, dans lequel une extrémité externe (71) de la partie élargie (62), dans la direction radiale du pneumatique (A), est située à l'extérieur, dans la direction radiale du pneumatique (A), par rapport à une partie la plus profonde (73) de la rainure de séparation (10) disposée dans une position interne extrême, dans la direction radiale du pneumatique (A).

4. Pneumatique (1) selon l'une quelconque des revendications 1 à 3, dans lequel chacune des deux extrémités de la partie élargie (62) de la première lamelle (51) est reliée à la rainure de séparation (10), ou atteint une position du bord de la bande de roulement (TE), dans une direction de la largeur du pneumatique (B), sans être reliée à la rainure de séparation (10).

5. Pneumatique (1) selon l'une quelconque des revendications 1 à 4, dans lequel la rainure de séparation (10) configurée pour séparer la partie d'appui en forme de pavé (30) inclut :
une rainure circonférentielle (21) s'étendant dans une direction circonférentielle du pneumatique (C) ; et
une rainure dans le sens de la largeur (22) s'étendant dans une direction de la largeur du pneumatique (B) à partir de la rainure circonférentielle (21).
